# EUROPEAN PATENT SPECIFICATION

(11) **EP 1 065 421 B1**
(45) Date of publication and mention of the grant of the patent: **25.02.2004**
(21) Application number: 99830411.7
(22) Date of filing: 28.06.1999
(51) Int. Cl.: F16K 35/06

(54) **Lockable operating unit for a valve**
Verriegelbare Betätigungseinheit eines Ventils
Unité de commande verrouillable d'un robinet

(43) Date of publication of application: 03.01.2001
(73) Proprietor: SERRATURE MERONI S.p.A., I-20054 Nova Milanese (Milan) (IT)
(72) Inventor: Meroni, Gersam, 20040 Briosco (Milano) (IT)
(74) Representative: Siniscalco, Fabio

(56) References cited:
- EP-A- 0 355 457
- DE-A- 3 533 461
- DE-C- 157 267

## Description

The present invention relates to a lockable operating unit for a valve.

Valves for shutting off the passage of gas, which are located downstream of a gas meter, and which permit or prevent the flow of gas to a user are known.

Such valves normally comprise a valve body in which is housed a shutter rigidly connected to a threaded shaft which extends outside the valve body and on which an operating member in the form of a butterfly handle or lever is fixed by means of a nut. The rotation of the operating member causes the rotation of the shaft and consequently of the shutter, to open or close the valve, in other words to permit or prevent the flow of gas to the user. The exterior of the valve body has a reference element against which two stop parts of the operating member bear in two positions corresponding in one case to the closing of the valve and in the other case to its opening. The angle of rotation of the operating member between the two aforesaid closed and open positions is normally 90°.

In these valves, it has been found necessary to have the operating member provided with a special lock which performs two functions, namely enabling the user to lock the valve in the closed position to prevent it from being opened by others, and allowing the gas supplier to lock the valve in the closed position, thus also preventing the user from unlocking it with his own key. For the latter function, the gas supplier has a special key which, as well as enabling the lock to be set to the valve locking or release position as can be done by the user with his own key, allows the lock to be set to a specific position in which the user can no longer move the lock. The locking of the valve may become necessary for the user, for example, if the latter is in arrears.

Normally, such valves have no locks, and, if valves with locks are to be provided, the valves must be completely replaced. An example of a specially adapted valve structure with an integral locking unit is shown for example in EP-A-0 355 457. To carry out this replacement it is necessary to shut off the flow of gas ahead of the valve, remove the old valve from the pipe, fit the new lockable valve on the pipe, and restore the gas flow ahead of the valve.

This entails a certain cost, arising from the complete replacement of the valve and the operations mentioned above for the replacement.

The object of the present invention is to propose a lockable unit for operating a valve, of the type mentioned above, which enables the valve to be provided with a lock without the need to replace the valve completely.

This object is achieved by means of a lockable unit for operating a valve, comprising a valve body in which is housed a shutter connected to a shaft extending outside the valve body, and which is provided with at least one external reference element, in which the shaft can rotate between a closed position and an open position of the valve, characterized in that it comprises:
- a sleeve which can be fitted on the valve body and locked with respect to rotation by said reference element;
- means for axially fixing the sleeve on the valve body;
- a cylinder lock comprising a barrel, a cylinder housed in the barrel, and a bolt moved by the cylinder between a closing position and an opening position of the lock, in which the barrel is housed in a freely rotatable way in the sleeve, is integral with an external operating member, and can be fixed with respect to rotation to said shaft, and in which, in the closed position of the lock and in the closed position of the valve, the bolt engages the barrel of the lock with the sleeve with respect to rotation, and in the open position of the lock the bolt is in a position of disengagement and allows the barrel to rotate freely in the sleeve.

The invention will be more clearly understood from the following description of one embodiment of it, provided by way of example, and illustrated in the attached drawings in which:
Fig. 1 is an exploded perspective view of a lockable unit for operating a valve, according to the invention;
Fig. 2 is a longitudinal section of one component of the unit in Fig. 1;
Figs. 3 and 4 are views from above and below, respectively, of the component in Fig. 2;
Figs. 5 and 6 are longitudinal sectional views, rotated through 90° with respect to each other, of the unit in Fig. 1 when fitted;
Fig. 7 is a sectional front view of the unit in Fig. 1 when fitted, according to the line VII-VII in Fig. 5;
Figs. 8 and 9 show the unit in Fig. 1 as illustrated in Fig. 7, but in different operating conditions;
Fig. 10 is a sectional front view of the unit in the operating condition in Fig. 9, according to the line X-X in Fig. 6.

In the figures, the lockable operating unit is indicated in a general way by 1, while the valve to which the lockable operating unit is applied is indicated by 2.

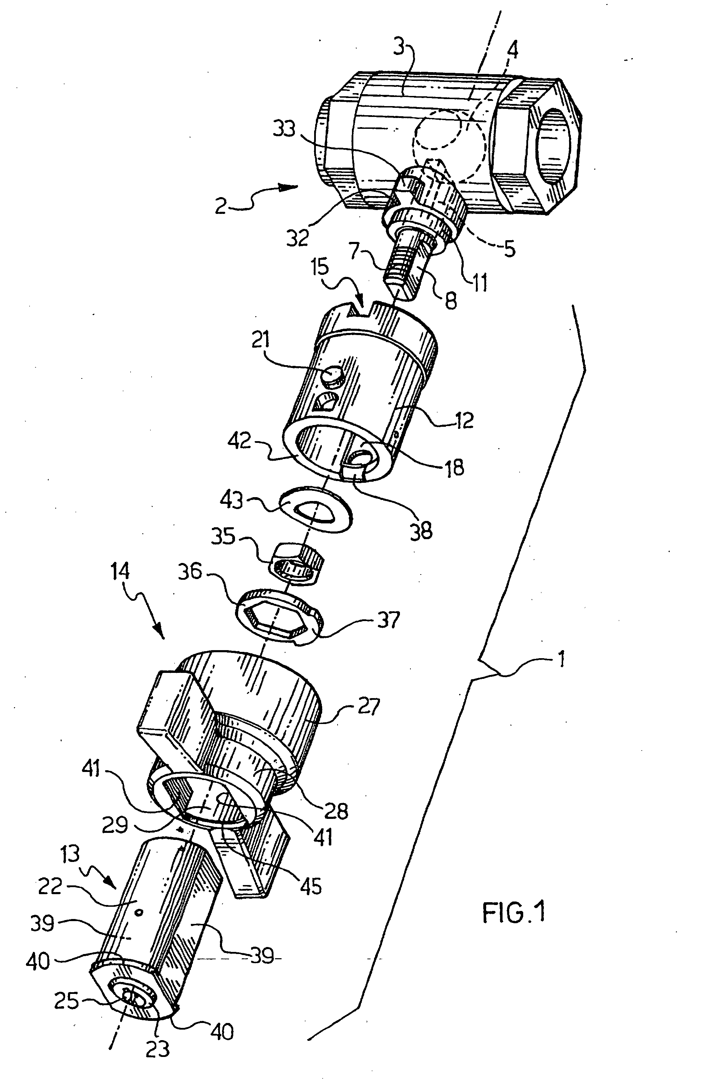

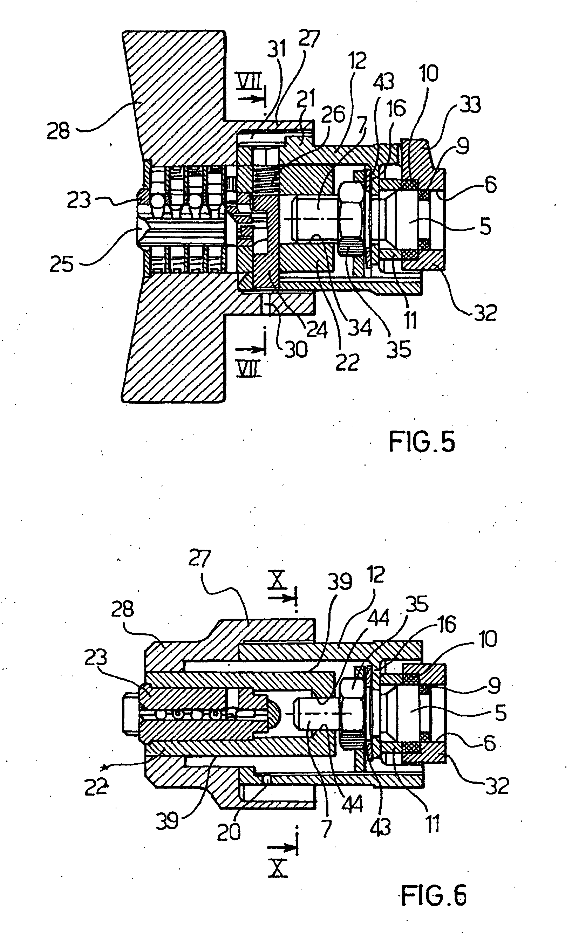

The valve 2 is of the type used for shutting off gas, combined with a gas meter downstream of it. With reference to Fig. 1, such valve 2 comprises (Fig. 1) a valve body 3 in which a shutter 4 capable of shutting off the gas is housed. The shutter 4 is rigidly connected to a shaft 5 rotatable in a seat 6 (Figs. 5 and 6) formed in a transverse cylindrical portion 32 of the valve body 3. The shaft 5 extends outside the valve body 3 in the form of a threaded shank 7 having two opposing flat faces 8. The seal between the shaft 5 and the seat 6 to prevent the outflow of gas is provided (Figs. 5 and 6) by an inner sealing ring 9 and by an additional gasket 10 which is compressed by a stuffing box 11 which extends outside the seat 6 next to the threaded shank 7. The cylindrical portion 32 of the valve body 3 is provided with an external reference lug 33.

Normally, the shaft 5 is connected rigidly, by means of a nut screwed on to the shank 7 of the shaft, to an operating handle without a lock, which enables the shutter 4 to be rotated between a closed valve position and an open valve position.

The operating unit 1 can replace the operating handle without a lock, to enable the operation of the lockable valve to be obtained.

Such lockable operating unit 1 comprises a sleeve 12, a cylinder lock 13 and a butterfly operating handle 14.

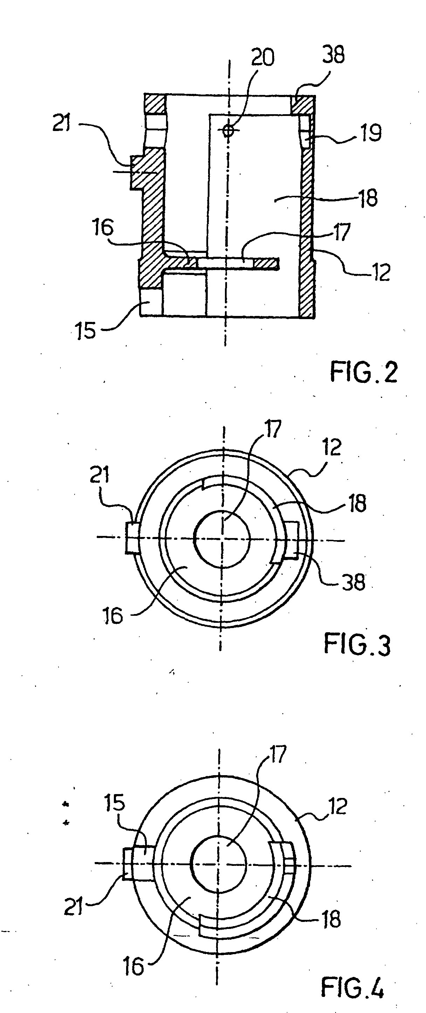

The sleeve 12 is illustrated in detail in Figs. 2, 3, 4. It is provided with a notch 15 at one end. Internally, the sleeve 12 is provided with a transverse wall 16 in which a hole 17 is formed along the axis of the sleeve. Also internally, a recess 18 in the shape of an arc of a circle is formed over almost the whole length of the sleeve. A blind hole 19 is formed in a predetermined position in the recess 18. A transverse through hole 20 is formed in another predetermined position in the sleeve. Externally, the sleeve 12 has a cylindrical projection 21; the sleeve also has an edge 42 with a chamfered portion 38 on the part opposite the recess 15.

The cylinder lock 13, of a known type, comprises a barrel 22 and a cylinder 23 which operates a bolt 24 (Fig. 5) by means of a key, not illustrated, which is inserted into a keyhole 25 of the cylinder 23. The bolt 24 (Fig. 5) projects from the barrel 22 and a spring 26 acts on it constantly. The barrel 22 has two opposing flat faces 39 on its exterior, and two opposing projecting edges 40 on its front; additionally, an axial seat 34 (Figs. 5, 6) is formed in the barrel and opens to the exterior, on the opposite end from the keyhole 25.

The operating handle 14 has a cylindrical portion 27 and a butterfly-shaped portion 28, and an axial through seat 29 with two opposing flat walls 41 is formed in it. The cylindrical portion 27 is provided (Fig. 5) with a transverse through hole 30 and, like the sleeve 12, has an internal recess 31 in the form of an arc of a circle.

The operating unit 1 is fitted on to the valve 2 in the following way, with reference to Figs. 1, 5, 6.

First of all, the sleeve 12 is fitted on to the transverse cylindrical portion 32 of the valve body 3 in such a way that the lug 33 of this cylindrical portion is inserted into the notch 15 of the sleeve 12 and the shank 7 of the shaft 5 is inserted into the hole 17 in the transverse inner wall 16 of the sleeve 12. A corrugated washer 43 is fitted on to the shank 7, and a polygonal nut 35 is then screwed on to lock the inner wall 16 of the sleeve 12 against the stuffing box 11. In this way, the sleeve 12 is fixed with respect to rotation to the valve body 3 by the engagement of the lug 33 with the notch 15 and is fixed axially to this valve body by the engagement of the nut 35 with the shank 7.

An internally polygonal locking ring 36 is fitted on to the screwed-on nut 35 in such a way that it mates perfectly with the nut 35, and is provided externally with a profile 37 projecting in the form of an arc of a circle, which is housed in the internal recess 18, in the form of an arc of a circle, of the sleeve 12. The angular extension of the profile 37 is smaller than that of the recess 18.

The operating handle 14 is then fitted on to the sleeve 12 in such a way that the projection 21 of the sleeve is housed in the recess 31 of the cylindrical portion 27 of the operating handle.

The lock 13 is then inserted into the seat 29 of the operating handle 14 in such a way that the two flat faces 39 of the barrel 22 of the lock mate with the flat walls 41 of such seat 29, so that the operating handle and the lock are fixed together with respect to rotation. The lock is also inserted into the sleeve 12, and in this insertion, if the position of the aforesaid components is as shown in Fig. 1, the bolt 24 is next to the chamfer 38 of the sleeve 12 and can therefore pass over the edge 42 of the sleeve and snap into the internal recess 18 of the sleeve in such a way as to prevent the lock from slipping out of the sleeve. The entry edge of the seat 29 of the operating handle 14 also has a chamfer 45 to permit the passage of the bolt 24 of the lock 13. When the lock is inserted into the sleeve, the shank 7 of the shaft 5 of the valve 2 penetrates into the seat 34 of the barrel 22 of the lock; the flat faces 8 of the shank 7 mate with two corresponding flat faces 44 of the seat 34 in such a way as to fix the shank and the barrel together with respect to rotation. On completion of the insertion, the edges 40 of the lock bear frontally on the butterfly-shaped portion 28 of the operating handle in such a way as to hold the lock securely in the inserted position. The keyhole 25 of the lock is positioned facing outwards.

The operating unit 1 which has been described operates in the following way.

In Figs. 5, 6, 7 the operating handle 14 is in the position corresponding to the closed position of the valve 2, in which the shutter 4 prevents the flow of gas inside the valve. The lock 13 is also in the closed position.

In such closed position of the valve 2, the bolt 24 of the lock 13 is inserted into the hole 19 in the sleeve 12, and held there by the spring 26, locking the barrel 22 of the lock with respect to rotation. In this way the operating handle 14, integral with the barrel 22, is locked with respect to rotation and the valve 2 cannot be opened.

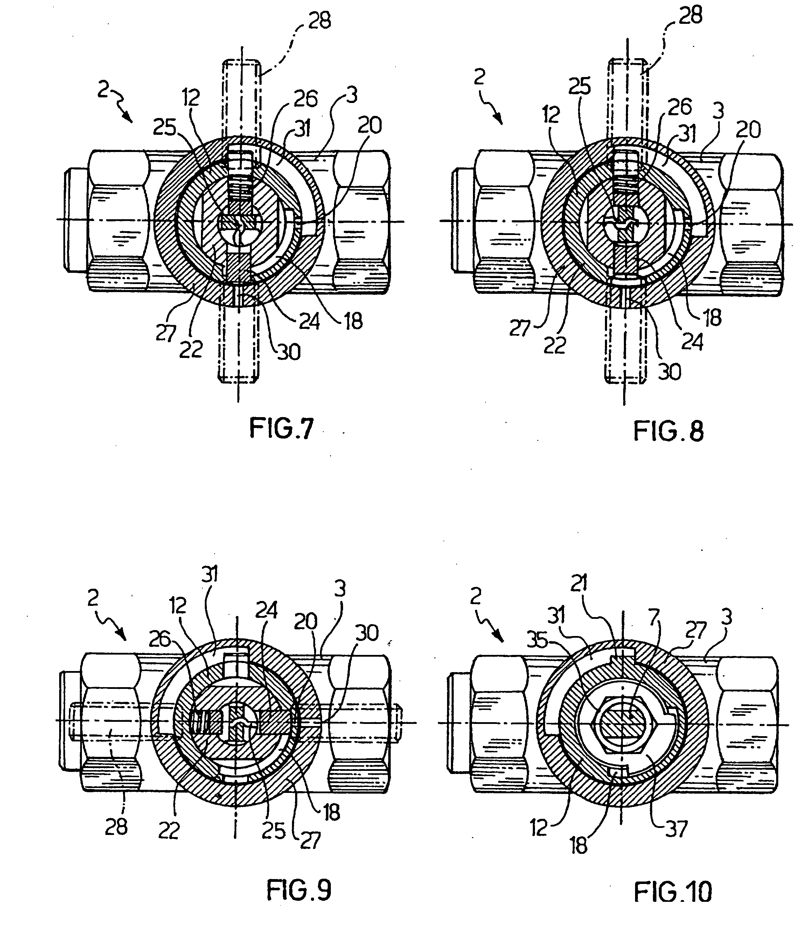

To open the valve 2, the lock 13 is first opened in the usual way, by inserting the key and rotating the cylinder 23 of the lock in such a way as to withdraw the bolt 24 from the hole 19 and to release the barrel 22 from the sleeve 12 with respect to rotation, as shown in Fig. 8. When the operating handle 14 is rotated through 90° in the anti-clockwise direction, the valve is brought into the open position shown in Fig. 9; this is because the rotation of the handle 14 causes the rotation of the cylinder 22, of the shank 7 of the shaft 5 and consequently of the shutter 4 connected to the shaft. In Fig. 9, the lock is in the closed position.

To reclose the valve 3, the operating handle 14 is rotated in the opposite direction, until it is brought into the position shown in Fig. 7, a position in which the spring 26 makes the bolt 24 of the lock 13 snap back into the hole 19 of the sleeve 12.

The rotation of the handle 14 is subject to friction as a result of the relative frictional sliding motion between the nut 35, the washer 43 and the inner wall 16 of the sleeve 12, and between the shutter 4 and the seat of the shutter; the nut 35 cannot slacken in any case, owing to the presence of the locking ring 36 and, in particular, to the fact that the nut is fixed to such ring with respect to rotation and the projecting profile 37 of the ring, being housed in the recess 18 of the sleeve 12, can move in a limited way in the recess itself, as may be understood from Fig. 10.

The angle of rotation of the handle 14 is 90°, and . is demarcated jointly by the path of the bolt 24 of the lock 13 in the recess 18 of the sleeve 12 and the path of the projection 21 of the sleeve 12 in the recess 31 of the operating handle 14.

The lock 13 which is illustrated is of the type described in the introduction; in other words, in addition to the normal closed and open positions mentioned above which the gas user can access by means of the key, it has a special position which can be accessed only with a special key available to the gas supplier, in which the user can no longer move the lock.

As has been demonstrated above, the operating unit 1 can be used to provide the valve 2 with a lock without the need to replace it completely.

The operating unit 1 consists of a small number of components, and the fitting to the valve requires, as has been seen, simple and rapid operations. The small number of components and their connection make the unit reliable.

The removal of the unit is equally simple and rapid, requiring operations which are the reverse of those mentioned; in particular, the unit can be removed only when the unit is in the open valve position (Fig. 9), since the hole 30 of the handle 14 and the hole 20 of the sleeve 12 are aligned and a pointed tool can be inserted into these holes to push the bolt 24 into the barrel 22 of the lock 13 so that the handle with the lock can be withdrawn.

This operating unit can be fitted to any type of valve, not necessarily a gas valve but also one for other applications (for shutting off liquids, for example), of the type mentioned above, comprising a valve body, a shutter connected to a shaft extending outside, and an external reference element. The fitting can be carried out at the place where the valve is installed, or in a factory on a new or used valve. The advantages of a simple and rapid fitting are also present where fitting is carried out in a factory.

Clearly, variations of and/or additions to what has been described and illustrated may be provided.

In particular, the configuration of the various components of the unit may vary.

The operating handle may be simply circular with knurling in the area where it is gripped, or may be of the lever type, or other.

The configuration of the element of the sleeve which is coupled to the reference element of the valve body clearly depends on the configuration of the latter.

It would be possible to omit the locking ring which prevents the slackening of the nut, and to use a self-locking nut. However, the locking ring has been found to be particularly effective.

The internal guides for determining the rotary movement of the operating handle may be made in functionally equivalent ways, although those described and illustrated have been found to be simple in construction and effective in use.

## Claims

1. Lockable unit (1) for operating a valve (2), comprising a valve body (3) in which is housed a shutter (4) connected to a shaft (5) extending outside the valve body (3), and which is provided with at least one external reference element (33), in which the shaft (5) can rotate between a closing position and an opening position of the valve (2), **characterized in that** it comprises:
- a sleeve (12) which can be fitted on the valve body (3) and locked with respect to rotation by said reference element (33);
- means (35, 36, 43) for axially fixing the sleeve (12) on the valve body (3);
- a cylinder lock (13) comprising a barrel (22), a cylinder (23) housed in the barrel (22), and a bolt (24) moved by the cylinder (23) between a closing position and an opening position of the lock (13), in which the barrel (22) is housed in a freely rotatable way in the sleeve (12), is integral with an external operating member (14), and can be fixed with respect to rotation to said shaft (5), and in which, in the closing position of the lock . (13) and in the closing position of the valve (2), the bolt (24) engages the barrel (22) of the lock (13) with the sleeve (12) with respect to rotation, and in the opening position of the lock (13) the bolt (24) is in a position of disengagement and allows the barrel (22) to rotate freely in the sleeve (12).

2. Unit according to Claim 1, in which the sleeve (12) has a notch (15) fitted to receive the external reference element of the valve body (3) in form of a lug (33) to lock the sleeve (12) to the valve body (3) with respect to rotation.

3. Unit according to Claim 1 or 2, in which the sleeve (12) is provided internally with a transverse wall (16) having an axial hole (17) into which can be inserted as a threaded part (7) of the shaft (5) extending outside on to which a nut (35) can be screwed for the axial fixing of the sleeve (12) to the valve body (3).

4. Unit according to any one of the preceding claims, in which the sleeve (12) is provided internally with a recess (18) in the form of an arc of a circle, in which the bolt (24) of the lock (13) runs between two outer limit positions corresponding to the closing and opening positions of the valve (2), and in which is formed a blind hole (19) where the bolt (24) is inserted in the closing position of the lock (13) to lock the external operating member (14).

5. Unit according to Claim 4 when dependent on Claim 3, in which a locking ring (36) which is coupled removably to the nut (35) so that it is fixed to it with respect to rotation is provided, and is provided externally with a projecting profile (37) in the form of an arc of a circle, which is housed in the internal recess (18) of the sleeve (12).

6. Unit according to any one of Claims 3, 5, or 4 when dependent on Claim 3, in which an elastic washer (43) is interposed between the transverse wall (16) and the nut (35).

7. Unit according to Claim 4, in which elastic means (26) act on the bolt (24) to permit the elastic snap-fitting of the bolt (24) in the recess (18) of the sleeve (12).

8. Unit according to Claim 7, in which a front edge (42) of the sleeve (12) has a chamfered portion (38) to permit the insertion of the lock (13) into the sleeve (12) with the passage of the bolt (24).

9. Unit according to Claim 8, in which the lock (13) has at its front one or more projecting edges (40) which bear on the front part of the operating member (14).

10. Unit according to any one of the preceding claims, in which the operating member (14) has a cylindrical portion (27) which surrounds at least a longitudinal portion of the sleeve (12).

11. Unit according to Claim 10, in which the cylindrical portion (27) has an internal recess (31) in the form of an arc of a circle, in which a projection of the sleeve (12) runs between two outer limit positions corresponding to the closing and opening positions of the valve (2).

12. Unit according to Claim 10, when dependent on Claim 7, in which the sleeve (12) and the cylindrical portion (27) of the handle (14) have corresponding through holes (20, 30) which are aligned with each other and are located next to the bolt (24) of the lock (13) in a predetermined angular position of the operating member (14) so that it is possible to gain access from the outside to the bolt (24) and to detach it from the recess (18) of the sleeve (12).

13. Unit according to Claim 12, in which said predetermined angular position of the operating member (14) corresponds to the opening position of the valve (2).

## Patentansprüche

1. Verriegelbare Einheit (1) zur Betätigung eines Ventils (2), welches einen Ventilkörper (3) aufweist, in dem ein mit einem zur Außenseite des Ventilkörpers (3) verlaufenden Schaft (5) verbundener Verschluss (4) untergebracht ist und der mit zumindest einem äußeren Bezugselement (33) versehen ist, in welchem der Schaft (5) sich zwischen einer Schließposition und einer Öffnungsposition des Ventils (2) drehen kann,
**dadurch gekennzeichnet,**
- **dass** sie eine Hülse (12) aufweist, die an dem Ventilkörper (3) angebracht und bezüglich einer Drehung durch das genannte Bezugselement (33) verriegelt werden kann,
- **dass** Einrichtungen (35, 36, 43) zur axialen Festlegung der Hülse (12) an dem Ventilkörper (3) vorgesehen sind
- und **dass** ein Zylinderschloss (13), welches eine Zylinderbüchse (22), einen in der Zylinderbüchse (22) untergebrachten Zylinder (23) und einen Riegel (24) aufweist, der durch den Zylinder (23) zwischen einer Schließposition und einer öffnungsposition des Schlosses (13) bewegt wird, wobei die Zylinderbüchse (22) in der Hülse (12) in einer frei drehbaren weise untergebracht ist, mit einem äußeren Betätigungsglied (14) zusammenhängend gebildet ist und bezüglich einer Drehung an dem genannten Schaft (5) festgelegt werden kann, wobei in der Schließposition des Schlosses (13) und in der Schließposition des Ventils (2) der Riegel (24) die Zylinderbuchse (22) des Schlosses (13) mit der Hülse (12) bezüglich einer Drehung kuppelt
und wobei in der öffnungsposition des Schlosses (13) der Riegel (24) sich in einer Ausrückposition befindet und der Zylinderbüchse (22) ermöglicht, sich in der Hülse (12) frei zu drehen.

2. Einheit nach Anspruch 1, wobei die Hülse (12) eine Nut (15) enthält, die so angebracht ist, dass sie das äußere Bezugselement des Ventilkörpers (3) in Form eines Ansatzes (33) zur Verriegelung der Hülse (12) an dem Ventilkörper (3) bezüglich einer Drehung aufnimmt.

3. Einheit nach Anspruch 1 oder 2, wobei die Hülse (12) im Innern mit einer Querwand (16) versehen ist, die ein axiales Loch (17) aufweist, in das ein Gewindeteil (7) des Schaftes (5) eingesetzt werden kann, dessen Gewindeteil sich nach außen erstreckt und auf den eine Mutter (35) zur axialen Festlegung der Hülse (12) an dem Ventilkörper (3) geschraubt werden kann.

4. Einheit nach einem der vorhergehenden Ansprüche, wobei die Hülse (12) im Innern mit einer Ausnehmung (18) in Form eines Kreisbogens versehen ist,
wobei der Riegel (24) des Schlosses (13) zwischen zwei äußeren Grenzpositionen entsprechend den Schließ- und Öffnungspositionen des Ventils (2) läuft
und wobei ein Blindloch (19) dort gebildet ist, wo der Riegel (24) in der Schließposition des Schlosses (13) zur Verriegelung des äußeren Betätigungsgliedes (14) eingeführt ist.

5. Einheit nach Anspruch 4 unter Rückbeziehung auf Anspruch 3, wobei ein Verriegelungsring (36) vorgesehen ist, der mit der Mutter (35) derart lösbar verbunden ist, dass er an dieser in Bezug auf eine Drehung festgelegt ist, und der außen mit einem vorstehenden Profil (37) in Form eines Kreisbogens versehen ist, welches in der inneren Ausnehmung (18) der Hülse (12) aufgenommen ist.

6. Einheit nach einem der Ansprüche 3, 5 oder 4 unter Rückbeziehung auf Anspruch 3, wobei eine elastische Scheibe (43) zwischen der Querwand (16) und der Mutter (35) eingefügt ist.

7. Einheit nach Anspruch 4, wobei eine elastische Einrichtung (26) auf den Riegel (24) wirkt, um eine elastische Schnappverbindung des Riegels (24) in der Ausnehmung (18) der Hülse (12) zu ermöglichen.

8. Einheit nach Anspruch 7, wobei eine Vorderkante (42) der Hülse (12) einen abgefasten Bereich (38) aufweist, um die Einführung des Schlosses (13) in die Hülse (12) beim Durchgang des Riegels (24) zu ermöglichen.

9. Einheit nach Anspruch 8, wobei das Schloss (13) an seiner Vorderseite einen oder mehrere vorstehende Ränder (40) aufweist, die am vorderen Teil des Betätigungsgliedes (14) anliegen.

10. Einheit nach einem der vorhergehenden Ansprüche, wobei das Betätigungsglied (14) einen zylindrischen Teil (27) aufweist, der zumindest einen Längsteil der Hülse (12) umgibt.

11. Einheit nach Anspruch 10, wobei der zylindrische Teil (27) eine Innenausnehmung (31) in Form eines Kreisbogens aufweist und wobei ein Vorsprung der Hülse (12) zwischen zwei äußeren Grenzpositionen entsprechend den Schließ- und öffnungspositionen des Ventils (2) läuft.

12. Einheit nach Anspruch 10 unter Rückbeziehung auf Anspruch 7, wobei die Hülse (12) und der zylindrische Teil (27) des Handgriffs (14) entsprechende Durchgangslöcher (20, 30) aufweisen, die zueinander ausgerichtet sind und die neben dem Riegel (24) des Schlosses (13) in einer bestimmten Winkelposition des Betätigungsgliedes (14) derart festgelegt sind, dass es möglich ist, von der Außenseite zu dem Riegel (24) Zugang zu erhalten und ihn aus der Ausnehmung (18) der Hülse (12) zu lösen.

13. Einheit nach Anspruch 12, wobei die genannte bestimmte winkelposition des Betätigungsgliedes (14) der Offnungsposition des Ventils (2) entspricht.

## Revendications

1. Unité verrouillable (1) pour la manoeuvre d'un robinet (2), comportant un corps de robinet (3) dans lequel est logé un obturateur (4) relié à un arbre (5) s'étendant à l'extérieur du corps (3) de robinet, et qui est pourvue d'au moins un élément extérieur (33) de référence, dans lequel l'arbre (5) peut tourner entre une position de fermeture et une position d'ouverture du robinet (2), **caractérisée en ce qu'**elle comporte :
- un manchon (12) qui peut être monté sur le corps (3) du robinet et verrouillé par rapport à une rotation par ledit élément de référence (33) ;
- des moyens (35, 36, 43) destinés à fixer axialement le manchon (12) sur le corps (3) du robinet ;
- une serrure (13) à cylindre comportant un barillet (22), un cylindre (23) logé dans le barillet (22), et un pêne (24) déplacé par le cylindre (23) entre une position de fermeture et une position d'ouverture de la serrure (13), dans laquelle le barillet (22) est logé de façon à pouvoir tourner librement dans le manchon (12), est réalisé d'une seule pièce avec un élément extérieur (14) de manoeuvre et peut être fixé par rapport à une rotation audit arbre (5), et dans laquelle, dans la position de fermeture de la serrure (13) et dans la position de fermeture du robinet (2), le pêne (24) engage le barillet (22) de la serrure (13) avec le manchon (12) par rapport à une rotation, et dans la position d'ouverture de la serrure (13), le pêne (24) est dans une position de dégagement et permet au barillet (22) de tourner librement dans le manchon (12).

2. Unité selon la revendication 1, dans laquelle le manchon (12) présente une encoche (15) prévue pour recevoir l'élément de référence extérieur du corps (3) du robinet sous la forme d'un ergot (33) pour verrouiller le manchon (12) au corps (3) du robinet par rapport à une rotation.

3. Unité selon la revendication 1 ou 2, dans laquelle le manchon (12) est pourvu intérieurement d'une paroi transversale (16) ayant un trou axial (17) dans lequel peut être insérée une partie filetée (7) de l'arbre (5) s'étendant à l'extérieur, sur laquelle un écrou (35) peut être vissé pour la fixation axiale du manchon (12) au corps (3) du robinet.

4. Unité selon l'une quelconque des revendications précédentes, dans laquelle le manchon (12) est pourvu intérieurement d'un évidement (18) sous la forme d'un arc de cercle, dans lequel le pêne (24) de la serrure (13) se déplace entre deux positions limites extérieures correspondant aux positions de fermeture et d'ouverture du robinet (2), et dans lequel est formé un trou borgne (19) où le pêne (24) est introduit dans la position de fermeture de la serrure (13) pour verrouiller l'élément extérieur (14) de manoeuvre.

5. Unité selon la revendication 4 lorsqu'elle dépend de la revendication 3, dans laquelle il est prévu un anneau (36) de blocage qui est relié de façon amovible à l'écrou (35) afin d'y être fixé par rapport à une rotation, et qui est pourvu extérieurement d'un profil (37) en saillie sous la forme d'un arc de cercle, qui est logé dans l'évidement intérieur (18) du manchon (12).

6. Unité selon l'une quelconque des revendications 3, 5 ou 4 lorsqu'elle dépend de la revendication 3, dans laquelle une rondelle élastique (43) est interposée entre la paroi transversale (16) et l'écrou (35).

7. Unité selon la revendication 4, dans laquelle des moyens élastiques (26) agissent sur le pêne (24) pour permettre l'encliquetage élastique du pêne (24) dans l'évidement (18) du manchon (12).

8. Unité selon la revendication 7, dans laquelle un bord avant (42) du manchon (12) comporte une partie chanfreinée (38) pour permettre l'introduction de la serrure (13) dans le manchon (12) avec le passage du pêne (24).

9. Unité selon la revendication 8, dans laquelle la serrure (13) comporte, à sa partie avant, un ou plusieurs bords (40) en saillie qui porte sur la partie avant de l'élément (14) de manoeuvre.

10. Unité selon l'une quelconque des revendications précédentes, dans laquelle l'élément (14) de manoeuvre a une partie cylindrique (27) qui entoure au moins une partie longitudinale du manchon (12).

11. Unité selon la revendication 10, dans laquelle la partie cylindrique (27) présente un évidement intérieur (31) sous la forme d'un arc de cercle, dans lequel une saillie du manchon (12) se déplace entre deux positions limites extérieures correspondant aux positions de fermeture et d'ouverture du robinet (2).

12. Unité selon la revendication 10 lorsqu'elle dépend de la revendication 7, dans laquelle le manchon (12) et la partie cylindrique (27) de la poignée (14) ont des trous traversants correspondants (20, 30) qui sont alignés entre eux et sont situés à proximité du pêne (24) de la serrure (13) dans une position angulaire prédéterminée de l'élément de manoeuvre (14) afin qu'il soit possible d'accéder depuis l'extérieur au pêne (24) et de le dégager de l'évidement (18) du manchon (12).

13. Unité selon la revendication 12, dans laquelle ladite position angulaire prédéterminée de l'élément (14) de manoeuvre correspond à la position d'ouverture du robinet (2).
